# EUROPÄISCHE PATENTANMELDUNG

(11) **EP 3 567 836 A1**
(43) Veröffentlichungstag der Anmeldung: **13.11.2019**
(21) Anmeldenummer: 18200438.2
(22) Anmeldetag: 16.11.2016
(51) Int. Cl.: H04M 3/42

(54) **VERFAHREN ZUM ANRUFAUFBAU**

(30) Priorität: 29.02.2016 EP 16157768
(62) Teilanmeldung aus: 16199065.0
(71) Anmelder: EBE-EDV-Beratungs-und Entwicklungs-Gesm.b.H., 1010 Wien (AT)
(72) Erfinder: WALTER, Michael, 1010 Wien (AT)
(74) Vertreter: Weiser & Voith Patentanwälte Partnerschaft

(57) **Zusammenfassung**

Verfahren zum Anrufaufbau von einer Mobilstation (2), an die eine erste Rufnummer (B) in einem ersten Mobilfunknetz (6) vergeben ist, zu einem Teilnehmer (1), der eine weitere Rufnummer (A) hat, umfassend:
Speichern einer Zuordnung (9) zwischen der ersten Rufnummer (B) und einer in einem zweiten Mobilfunknetz (5) vergebenen zweiten Rufnummer (VBₙ) im zweiten Mobilfunknetz (5) ;
Entgegennehmen eines Anrufs (18), welcher eine Rufnummer (C) im zweiten Mobilfunknetz (5) und/oder einen ersten Teil (A₁) der weiteren Rufnummer (A) in seiner Zielrufnummer (MT₃') und die erste Rufnummer (B) als Anruferkennung (CLI₃) enthält, im zweiten Mobilfunknetz (5);
Empfangen einer Folge (18') von Tastwahltönen, welche den zweiten Teil (A₂) der weiteren Rufnummer (A) und, falls nicht bereits in der Zielrufnummer (MT₃') enthalten, den ersten Teil (A₁) der weiteren Rufnummer (A) kodiert, über den Anruf (13);
Extrahieren der weiteren Rufnummer (A) aus der Zielrufnummer (MT₃) und aus der dekodierten Folge (18'), Ermitteln der der ersten Rufnummer (B) zugeordneten zweiten Rufnummer (VBₙ), und Erzeugen einer weiteren Anruferkennung (CLI₄) umfassend die zweite Rufnummer (VBₙ); und
Aufbauen eines weiteren Anrufs (20) vom zweiten Mobilfunknetz (5) oder einem weiteren Mobilfunk- oder Festnetz (5''') zu dem durch die Rufnummer (A) adressierten Teilnehmer (1) und Durchschalten des Anrufs (18) zum weiteren Anruf (20), wobei die weitere Anruferkennung (CLI₄) mitübermittelt wird.

## Beschreibung

Die vorliegende Erfindung betrifft ein Verfahren zum Anrufaufbau von einer Mobilstation, die durch eine Rufnummer in einem Mobilfunknetz identifiziert ist, zu einem Teilnehmer.

In der vorliegenden Beschreibung wird unter dem Begriff "Verbindung" oder "Anruf" sowohl eine übliche Sprachverbindung als auch eine bloße Signalisierungsverbindung im Rahmen eines Kurznachrichtendiensts (Short Message Service, SMS) von und zu einer Mobilstation verstanden, insbesondere nach einem 2G-, 3G-, 4G-, 5G-Standard oder höher, wie GSM, UMTS, LTE usw.

Rufnummern in Mobilfunknetzen werden in zunehmenden Maße zur Identifizierung von Personen verwendet, sei es in Adressverzeichnissen, auf Visitenkarten, in Inseraten usw. oder als Bestandteil von Login- oder Transaktionsdaten für Internetdienste, bei denen eine Zugangs- oder Transaktionsberechtigung durch Rücksenden eines Passworts an ein durch die Rufnummern identifiziertes Mobiltelefon des Benutzers gesandt wird, um erhöhte Sicherheit der Benutzerauthentifizierung zu gewährleisten. Durch solche neuartigen Verwendungen von Mobiltelefon-Rufnummern werden diese jedoch in zunehmenden Maß der Öffentlichkeit preisgegeben, und der Benutzer hat letztlich keinen Überblick oder Einfluss mehr darauf, welche Systeme oder Adressaten Kenntnis von seiner persönlichen Rufnummer erlangen. Dies läuft nicht nur dem Bedürfnis nach Datenschutz zuwider, sondern hält viele Benutzer auch davon ab, nutzbringende Internetdienste, die auf einer erhöhten Authentifizierungssicherheit durch Rückbestätigung an ein Mobiltelefon beruhen, zu verwenden, um seine Rufnummer zu schützen.

Die Schriften GB 2 454 886 A, US 2007/0064895 A1 und WO 03/024074 A2 zeigen jeweils ein Verfahren zum Verwenden von anonymen Rufnummern. Dazu ist im Heimatnetzwerk eines Mobilfunkteilnehmers eine Zuordnungsdatenbank implementiert, um die in diesem Mobilfunknetzwerk vergebene Rufnummer des Mobilfunkteilnehmers durch eine anonyme Rufnummer zu ersetzen. Anonyme Rufnummern sind daher nur für Mobilfunkteilnehmer verfügbar, deren Heimatnetzwerk eine derartige Zuordnungsdatenbank implementiert hat.

Die Erfindung setzt sich zum Ziel, diese Nachteile zu überwinden und Anrufverfahren für Teilnehmer von Mobilfunknetzen zu schaffen, welche deren Rufnummern in verbesserter Weise schützen.

Dieses Ziel wird gemäß einem ersten, in der Stammanmeldung der vorliegenden Teilanmeldung beanspruchten Aspekt mit einem Verfahren zum Anrufaufbau von einem Teilnehmer, der eine erste Anruferkennung hat, zu einer Mobilstation, an die eine erste Rufnummer in einem ersten Mobilfunknetz vergeben ist, erreicht, welches Verfahren umfasst:
Speichern einer Zuordnung zwischen der ersten Rufnummer und einer in einem zweiten Mobilfunknetz vergebenen zweiten Rufnummer in einem Serviceknoten des zweiten Mobilfunknetzes;
Entgegennehmen eines ersten Anrufs, welcher an die zweite Rufnummer gerichtet ist und die erste Anruferkennung enthält, im zweiten Mobilfunknetz;
Ermitteln der der zweiten Rufnummer zugeordneten ersten Rufnummer aus der gespeicherten Zuordnung und Erzeugen einer zweiten Anruferkennung umfassend eine Netzvorwahl des zweiten Mobilfunknetzes und die erste Anruferkennung; und
Aufbauen eines zweiten Anrufs vom zweiten Mobilfunknetz oder einem weiteren Mobilfunk- oder Festnetz zu der durch die erste Rufnummer adressierten Mobilstation und Durchschalten des ersten Anrufs zum zweiten Anruf, wobei die zweite Anruferkennung im zweiten Anruf mitübermittelt wird.

Das Verfahren schafft damit gleichsam eine "Firewall" für den Benutzer der Mobilstation im ersten Mobilfunknetz durch "Zwischenschaltung" eines zweiten Mobilfunknetzes, in welchem dem Teilnehmer eine zweite, "virtuelle" Rufnummer zugeordnet wird. Die zweite, virtuelle Rufnummer kann vom Benutzer bedenkenlos weitergegeben werden, ohne dass dadurch seine persönliche, erste Rufnummer der Öffentlichkeit preisgegeben wird. Der Benutzer kann die zweite, virtuelle Rufnummer beispielsweise als Telefonkontakt in öffentlichen Inseraten oder im Rahmen von Login- oder Transaktionsdaten von Internetdiensten verwenden, welche z.B. Bestätigungs-SMS mit Passwörtern oder Transaktionscodes über das Mobilfunknetz rücksenden, und gleichzeitig seine persönliche, erste Rufnummer vor Veröffentlichung schützen.

Bei dem Anrufaufbau zu der zweiten, virtuellen Rufnummer wird diese vom Serviceknoten des zweiten Mobilfunknetzes in die persönliche erste Rufnummer übersetzt, wobei an die angerufene Mobilstation gleichzeitig eine neue ("zweite") Anruferkennung übermittelt wird, die nicht nur die ursprüngliche ("erste") Anruferkennung des rufenden Teilnehmers sondern zusätzlich auch noch die Netzvorwahl des zweiten Mobilfunknetzes enthält. Anhand dieser in der zweiten Anruferkennung enthaltenen Netzvorwahl kann der angerufene Benutzer erkennen, dass der Anruf nicht seiner persönlichen Rufnummer, sondern seiner virtuellen Rufnummer gilt. Der angerufene Benutzer kann so beispielsweise entscheiden, ob er den an seine virtuelle Rufnummer gerichteten Anruf entgegennimmt oder nicht. Das Verfahren bietet dadurch nicht nur Vertraulichkeit und Datenschutz, sondern auch Zusatzinformation über den rufenden Teilnehmer, nämlich, ob dieser die persönliche oder die virtuelle Rufnummer gewählt hat und damit zu welchem privaten oder öffentlichen Bekanntenkreis dieser gehört.

Eine entsprechend programmierte Mobilstation kann die in der zweiten Anruferkennung mitempfangene Netzvorwahl des zweiten Mobilfunknetzes auch automatisch detektieren und dem Benutzer bei der Signalisierung des ankommenden Anrufs den Umstand der Verwendung der virtuellen Rufnummern auch besonders deutlich anzeigen, z.B. auf dem Display oder mit einem speziellen Klingelton der Mobilstation.

Der vom Serviceknoten veranlasste zweite Anruf kann dabei über das zweite Mobilfunknetz selbst oder über ein anderes Mobilfunk- oder Festnetz aufgebaut werden, mit welchem der Serviceknoten in Verbindung steht.

Eine besonders vorteilhafte Weiterbildung des Verfahrens umfasst ferner das Speichern zumindest einer weiteren Zuordnung zwischen jeweils der ersten Rufnummer und einer im zweiten Mobilfunknetz vergebenen weiteren zweiten Rufnummer im Serviceknoten, wobei für jede gespeicherte Zuordnung einer ersten Rufnummer eine Zuordnungskennung vergeben wird; und wobei die zweite Anruferkennung auch die Zuordnungskennung umfasst.

Der Benutzer der Mobilstation kann dadurch gleich mehrere verschiedene virtuelle (zweite) Rufnummern verwenden und an unterschiedliche Kreise der Öffentlichkeit ausgeben, beispielsweise für unterschiedliche Bekanntenkreise, unterschiedliche Websites, unterschiedliche Inserate usw. An der Mobilstation kann dann anhand der Anruferkennung, welche nun auch die Zuordnungskennung für die jeweilige angerufene virtuelle Rufnummer mitenthält, nicht nur erkannt werden, ob der Anrufer die persönliche oder virtuelle Rufnummer gewählt hat, sondern auch *welche* der mehreren virtuellen Rufnummern der Anrufer verwendet hat. Dadurch erhält der angerufene Benutzer weitere Informationen über den Öffentlichkeitskreis, aus dem der Anrufer kommt, und kann noch genauer und selektiver entscheiden, ob er den Anruf entgegennimmt oder nicht.

Das Verfahren lässt sich besonders einfach implementieren, wenn der an die zweite Rufnummer gerichtete erste Anruf anhand der Netzvorwahl des zweiten Mobilfunknetzes erkannt und zu diesem geleitet wird, wo er an einem Anschluss des zweiten Mobilfunknetzes entgegengenommen und von dort zum zweiten Anruf durchgeschaltet wird. Dadurch genügt eine herkömmliche Verkehrsausscheidung aufgrund der Netzvorwahl, um den an die zweite Rufnummer gerichteten Anruf zum zweiten Mobilfunknetz zu leiten.

Alternativ kann die zumindest eine virtuelle (zweite) Rufnummer im gesamten Telefonnetz und allen daran angeschlossenen Mobilfunknetzen publiziert werden, indem sie in das Heimatortsregister (Home Location Register, HLR) des zweiten Mobilfunknetzes eingetragen wird, falls gewünscht.

Im Rahmen des Verfahrens können bevorzugt auch verschiedenste Anruf-Filterfunktionen im Serviceknoten zu Gunsten des Benutzers der Mobilstation durchgeführt werden. Dazu wird bevorzugt der zweite Anruf nur dann aufgebaut und der erste Anruf nur dann zum zweiten Anruf durchgeschaltet, wenn die erste Anruferkennung in einer Zulassungsliste ("whitelist") enthalten oder in einer Sperrliste ("blacklist") nicht enthalten ist, die im Serviceknoten zur ersten Rufnummer gespeichert ist. Dadurch kann der Benutzer der Mobilstation vor unerwünschten Anrufen bewahrt werden ("blacklisting") bzw. es werden nur gewünschte Anrufe durchgestellt ("whitelisting").

In dem Fall, dass der Benutzer der Mobilstation über mehrere virtuelle Rufnummern verfügt, kann in diesem Sinne der zweite Anruf auch nur dann aufgebaut und der erste Anruf nur dann durchgeschaltet werden, wenn die erste Anruferkennung in einer solchen Zulassungsliste enthalten oder in einer solchen Sperrliste nicht enthalten ist, die im Serviceknoten zur ersten Rufnummer gespeichert ist.

Das Verfahren funktioniert auch in der umgekehrten Richtung für einen Anrufaufbau von der Mobilstation zum Teilnehmer, der durch seine erste Anruferkennung, hier auch als "weitere Rufnummer" bezeichnet, identifiziert ist, und umfasst dazu gemäß einem zweiten, in der Stammanmeldung der vorliegenden Teilanmeldung beanspruchten Aspekt:
Speichern einer Zuordnung zwischen der ersten Rufnummer und einer in einem zweiten Mobilfunknetz vergebenen zweiten Rufnummer in einem Serviceknoten des zweiten Mobilfunknetzes;
Entgegennehmen eines Anrufs, welcher die weitere Rufnummer in seiner Zielrufnummer und die erste Rufnummer als Anruferkennung enthält, im zweiten Mobilfunknetz;
Extrahieren der weiteren Rufnummer aus der Zielrufnummer, Ermitteln der der ersten Rufnummer zugeordneten zweiten Rufnummer aus der im Serviceknoten gespeicherten Zuordnung, und Erzeugen einer weiteren Anruferkennung umfassend die zweite Rufnummer; und
Aufbauen eines weiteren Anrufs vom zweiten Mobilfunknetz oder einem weiteren Mobilfunk- oder Festnetz zu dem durch die extrahierte weitere Rufnummer adressierten Teilnehmer und Durchschalten des Anrufs zum weiteren Anruf, wobei die weitere Anruferkennung im weiteren Anruf mitübermittelt wird.

Das Verfahren gemäß dem zweiten Aspekt ermöglicht wieder Datenschutz und Vertraulichkeit für die persönliche Rufnummer des nun rufenden Benutzers der Mobilstation, indem der nun angerufene Teilnehmer als Anruferkennung die virtuelle Rufnummer des Benutzers signalisiert bekommt.

Eine vorteilhafte Ausführungsform des Verfahrens gemäß dem zweiten Aspekt besteht darin, dass es zusätzlich umfasst:
Speichern zumindest einer weiteren Zuordnung zwischen jeweils der ersten Rufnummer und einer im zweiten Mobilfunknetz vergebenen weiteren zweiten Rufnummer im Serviceknoten, wobei für jede gespeicherte Zuordnung einer ersten Rufnummer eine Zuordnungskennung vergeben wird, und wobei die Zielrufnummer auch die Zuordnungskennung enthält;
wobei beim Extrahieren auch die Zuordnungskennung aus der Zielrufnummer extrahiert wird; und
wobei beim Erzeugen der weiteren Anruferkennung die der ersten Rufnummer zugeordnete zweite Rufnummer anhand der durch die extrahierte Zuordnungskennung angegebenen Zuordnung ermittelt wird.

In dieser bevorzugten Ausführungsform kann der rufende Benutzer nun - durch entsprechendes "Mitwählen" der Zuordnungskennung beim Wegrufen - auch jene seiner virtuellen Rufnummern angeben, welche der angerufene Teilnehmer als Anruferkennung signalisiert bekommt.

Um den Anruf, der die weitere Rufnummer des angerufenen Teilnehmers in seiner Zielrufnummer enthält, im zweiten Mobilfunknetz entgegenzunehmen, enthält diese Zielrufnummer bevorzugt als Vorwahl bzw. an ihrem Anfang die Netzvorwahl des zweiten Mobilfunknetzes. In einem dritten, hier beanspruchten Aspekt beruht die vorliegende Erfindung auf der Erkenntnis der Anmelderin, dass eine Zielrufnummer, welche sowohl die Netzvorwahl des zweiten Mobilfunknetzes als auch die Rufnummer des gerufenen Teilnehmers enthält, welch letztere wiederum die Netzvorwahl dessen Mobilfunknetzes enthält, eine beträchtliche Stellenlänge erreichen kann, deren vollständige Übertragung im Telefonnetz in manchen Situationen nicht mehr gewährleistet ist. Zur Lösung dieses Problems schafft die Erfindung ein Anrufverfahren von der Mobilstation zum Teilnehmer, umfassend:
Speichern einer Zuordnung zwischen der ersten Rufnummer und einer in einem zweiten Mobilfunknetz vergebenen zweiten Rufnummer in einem Serviceknoten des zweiten Mobilfunknetzes;
Entgegennehmen eines Anrufs, welcher eine vorgegebene Rufnummer im zweiten Mobilfunknetz und/oder einen ersten Teil der weiteren Rufnummer in seiner Zielrufnummer und die erste Rufnummer als Anruferkennung enthält, im zweiten Mobilfunknetz;
Empfangen einer Folge von Tastwahltönen, welche den zweiten Teil der weiteren Rufnummer und, falls nicht bereits in der Zielrufnummer enthalten, auch den ersten Teil der weiteren Rufnummer kodiert, über den entgegengenommenen Anruf, und Dekodieren der Folge im Serviceknoten;
Extrahieren der weiteren Rufnummer aus der Zielrufnummer und aus der dekodierten Folge, Ermitteln der der ersten Rufnummer zugeordneten zweiten Rufnummer aus der im Serviceknoten gespeicherten Zuordnung, und Erzeugen einer weiteren Anruferkennung umfassend die zweite Rufnummer; und
Aufbauen eines weiteren Anrufs vom zweiten Mobilfunknetz oder einem weiteren Mobilfunk- oder Festnetz zu dem durch die extrahierte weitere Rufnummer adressierten Teilnehmer und Durchschalten des Anrufs zum weiteren Anruf, wobei die weitere Anruferkennung im weiteren Anruf mitübermittelt wird.

Auf diese Weise kann die Stellenlänge der Zielrufnummer für den Anrufaufbau von der Mobilstation zum zweiten Mobilfunknetz auf eine im Telefonnetz übertragbare Stellenlänge, z.B. 16 Ziffern, begrenzt werden, während die verbleibenden Ziffern der Zielrufnummern zum Teilnehmer als Tastwahltöne über den solcherart zum zweiten Mobilfunknetz aufgebauten Anruf gesendet werden. Im zweiten Mobilfunknetz kann dann die gesamte Information aus im Anrufaufbau erhaltener Zielrufnummer einerseits und im Anruf nachgesendeten Tastwahltönen andererseits zusammengesetzt werden, um daraus die Zielrufnummer des Teilnehmers (einschließlich seiner Netzvorwahl) sowie eine optional mitempfangene Zuordnungskennung zu extrahieren. Die Verwendung von Tastwahltönen ist in der analogen Telefontechnik ein bewährtes, robustes Datenübertragungsverfahren, um Informationen über einen bereits aufgebauten Anruf zu übertragen. Das Verfahren der Erfindung ermöglicht damit alle obengenannten Vorteile des Datenschutzes und der Vertraulichkeit für die persönliche Rufnummer des Benutzers der Mobilstation.

Das erfindungsgemäße Verfahren kann optional umfassen:
Speichern zumindest einer weiteren Zuordnung zwischen jeweils der ersten Rufnummer und einer im zweiten Mobilfunknetz vergebenen weiteren zweiten Rufnummer im Serviceknoten, wobei für jede gespeicherte Zuordnung einer ersten Rufnummer eine Zuordnungskennung vergeben wird, und wobei entweder die Zielrufnummer oder die Folge auch die Zuordnungskennung enthält;
wobei beim Extrahieren auch die Zuordnungskennung extrahiert wird; und
wobei beim Erzeugen der weiteren Anruferkennung die der ersten Rufnummer zugeordnete zweite Rufnummer anhand der durch die extrahierte Zuordnungskennung angegebenen Zuordnung ermittelt wird.

Damit kann der rufende Benutzer durch Mitwählen der Zuordnungskennung beim Wegrufen auch jene seiner virtuellen Rufnummern angeben, welche der angerufene Teilnehmer als Anruferkennung signalisiert bekommt.

Die Verfahren der Erfindung ermöglichen auch jederzeit einen Rückruf von der an der virtuellen Rufnummer angerufenen Mobilstation zum ursprünglichen Anrufer, weil dessen Anruferkennung nicht verloren geht. In einem vierten Aspekt umfasst ein Verfahren zum Rückrufen des Teilnehmers von der Mobilstation aus, d.h. im Anschluss an ein Anrufverfahren gemäß dem ersten Aspekt, die folgenden Schritte:
Entgegennehmen eines dritten Anrufs, welcher die zweite Anruferkennung als Zielrufnummer und die erste Rufnummer als dritte Anruferkennung enthält, im zweiten Mobilfunknetz;
Extrahieren der ersten Anruferkennung aus der Zielrufnummer; und
Aufbauen eines vierten Anrufs vom zweiten Mobilfunknetz oder einem weiteren Mobilfunk- oder Festnetz zu dem durch die extrahierte erste Anruferkennung adressierten Teilnehmer und Durchschalten des dritten Anrufs zum vierten Anruf.

Bevorzugt umfasst das Verfahren dabei auch das Ermitteln der der ersten Rufnummer zugeordneten zweiten Rufnummer aus der im Serviceknoten gespeicherten Zuordnung und Erzeugen einer vierten Anruferkennung umfassend die ermittelte zweite Rufnummer; wobei die vierte Anruferkennung im vierten Anruf mitübermittelt wird.

Dadurch erhält der rückgerufene Teilnehmer als Anruferkennung wieder die virtuelle, zweite Rufnummer des Benutzers der Mobilstation, und dessen persönliche, erste Rufnummer bleibt verborgen und geschützt. Der rückgerufene Teilnehmer sieht nur die von ihm ursprünglich angerufene virtuelle Rufnummer und erkennt dies als normalen Rückruf des Benutzers der Mobilstation.

In jener Ausführungsform des Anrufverfahrens gemäß dem ersten Aspekt, in welcher mehrere virtuelle Rufnummern im zweiten Mobilfunknetz zugeordnet sind und an jede Zuordnung eine Zuordnungskennung vergeben ist, umfasst eine bevorzugte Ausführungsform des Rückrufverfahrens ferner das
Extrahieren auch der Zuordnungskennung aus der Zielrufnummer; und das
Ermitteln der der ersten Rufnummer zugeordneten zweiten Rufnummer anhand der durch die extrahierte Zuordnungskennung angegebenen Zuordnung.

Auch hier wird wieder beim Rückruf genau die vom ursprünglichen Anrufer verwendete virtuelle Rufnummer als Anruferkennung des Rückrufers signalisiert, so dass der Rückruf für den Rückgerufenen konsistent und transparent erscheint, ohne dass die persönliche Rufnummer des Benutzers der Mobilstationen publik wird.

Sowohl beim Anrufen als auch Rückrufen des Teilnehmers von der Mobilstation aus gemäß dem zweiten, dritten oder vierten Aspekt kann der Anruf der Mobilstation anhand der Netzvorwahl des zweiten Mobilfunknetzes erkannt und zu diesem geleitet werden, wo er an einem Anschluss des zweiten Mobilfunknetzes entgegengenommen und von dort zum weiteren bzw. vierten Anruf durchgeschaltet wird, so dass dafür lediglich eine Verkehrsauscheidung anhand der Netzvorwahl des zweiten Mobilfunknetzes genügt.

Bei der zumindest einen virtuellen zweiten Rufnummern kann es sich jeweils sowohl um eine direkt im zweiten Mobilfunknetz vergebene Rufnummer handeln, als auch um eine solche Rufnummer, die aus einem anderen Mobilfunknetz in das zweite Mobilfunknetz rufnummernportiert worden ist. Es versteht sich, dass eine derartige Rufnummerportierung bedeutet, dass diese virtuelle zweite Rufnummer im HLR des anderen Mobilfunknetzes, aus dem portiert wurde, als portierte Rufnummer eingetragen werden muss, wie es z.B. im Falle eines GSM-Netzes in den entsprechenden ETSI-Standards über die Rufnummernportierung definiert ist.

In jeder der beschriebenen Varianten des Verfahrens kann das zweite Mobilfunknetz ein herkömmliches, hardwarebasiertes Mobilfunknetz ("Mobile Network Operator", MNO) sein, oder alternativ als "Mobile Virtual Network Operator" (MVNO) in einem dritten, hardwarebasierten MNO-Mobilfunknetz virtualisiert sein.

Die Erfindung wird nachstehend anhand von in den beigeschlossenen Zeichnungen dargestellten Ausführungsbeispielen näher erläutert, in welchen zeigen:
die Fig. 1 und 2 Verfahren zum Rufaufbau von einem rufenden Teilnehmer zu einer angerufenen Mobilstation (Fig. 1) und in umgekehrter Richtung bzw. auch als Rückruf (Fig. 2), jeweils in Form eines schematischen Blockschaltbilds mit eingezeichneten Rufaufbau-Signalflüssen;
Fig. 3 das erfindungsgemäße Verfahren zum Rufaufbau bzw. Rückruf von der Mobilstation zum Teilnehmer, ebenfalls in Form eines schematischen Blockschaltbildes mit eingezeichneten Rufaufbau-Signalflüssen; und
Fig. 4 weitere Varianten der Verfahren der Figuren 1 bis 3 in derselben Darstellungsweise.

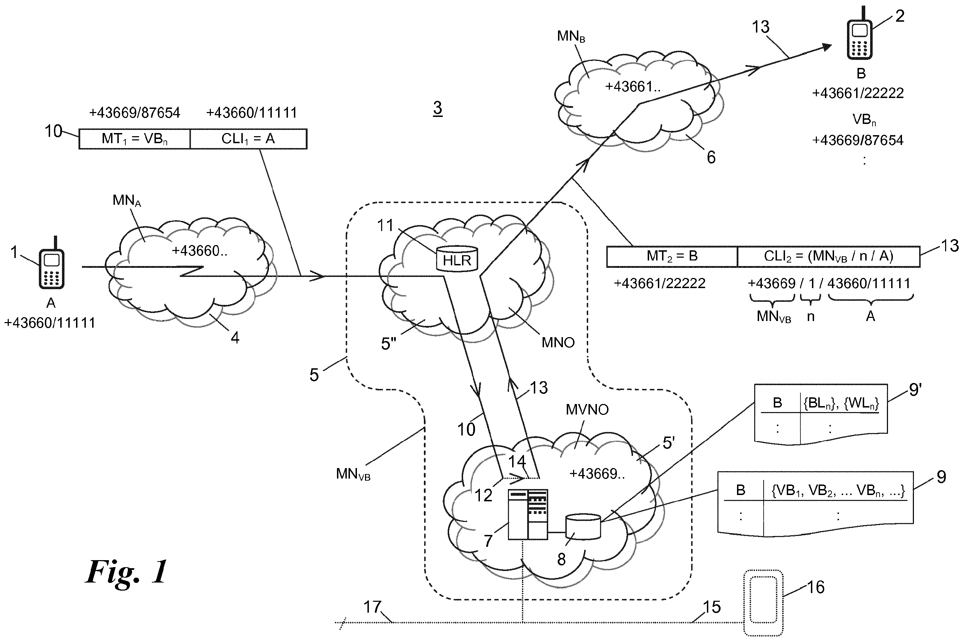

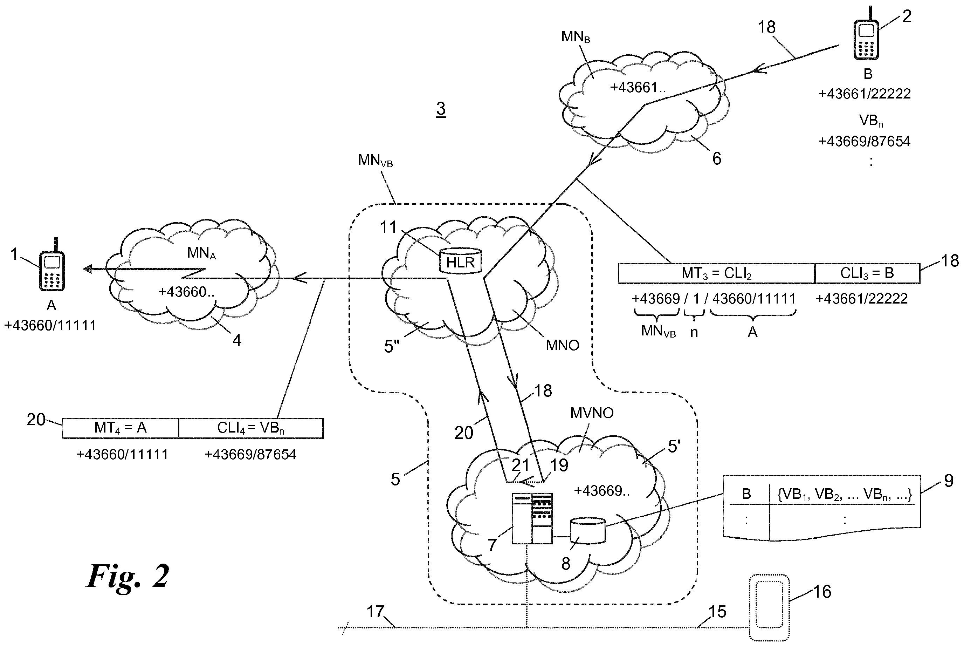

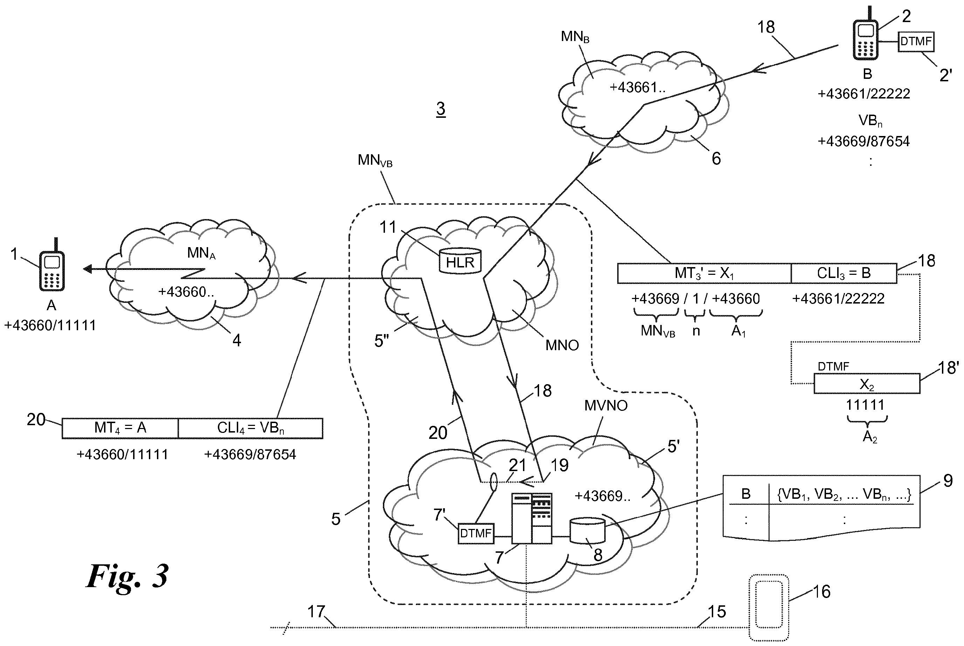

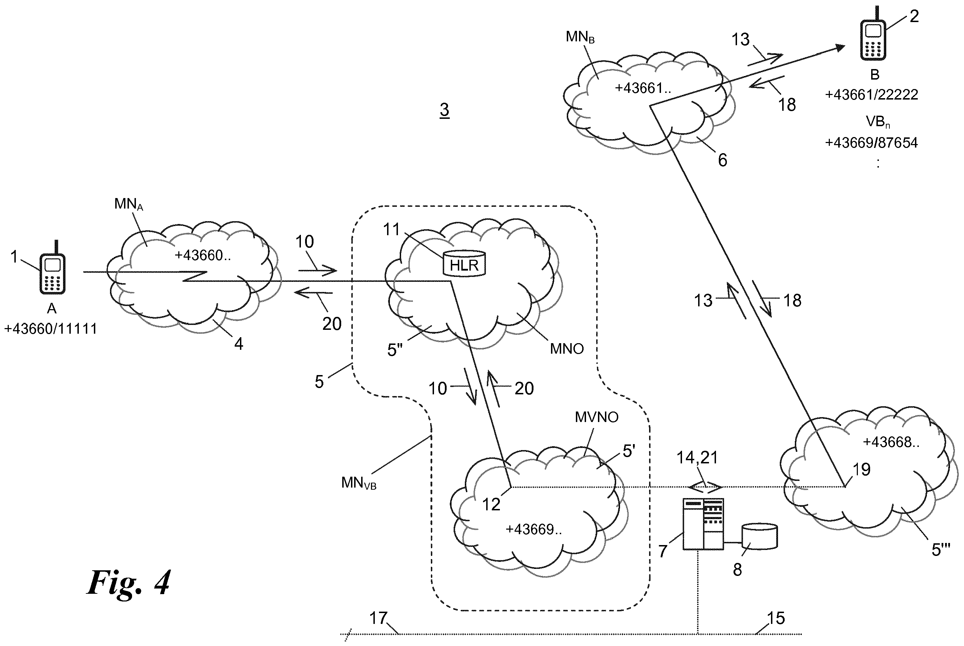

Die Fig. 1 bis 4 zeigen Verfahren zum Verbinden eines ersten Teilnehmers 1 mit einem zweiten Teilnehmer 2 über ein Telefonnetz 3, das sich aus einer Anzahl miteinander verbundener Mobilfunk- oder Festnetze zusammensetzt, von denen drei Mobilfunknetze 4, 5 und 6 beispielhaft dargestellt sind. In Fig. 1 ist das Verfahren zum Aufbauen eines Anrufs vom rufenden Teilnehmer 1 zum angerufenen Teilnehmer 2 dargestellt, in den Fig. 2 und 3 das Verfahren zum Aufbauen eines Anrufs oder Rückrufs vom nun rufenden Teilnehmer 2 zum nun gerufenen Teilnehmer 1, und in Fig. 4 Varianten der Verfahren der Fig. 1 bis 3.

Das Netz 6 des Teilnehmers 2 ist ein Mobilfunknetz nach einem 2G-, 3G-, 4G-, 5G-Standard oder höher, wie GSM, UMTS, LTE od.dgl. Der Teilnehmer 2 im Mobilfunknetz 6 ist demgemäß eine Mobilstation, beispielsweise ein Mobiltelefon, Smartphone usw.

Das Mobilfunknetz 6 ist im gesamten Telefonnetz 3 über seine Netzvorwahl MN_{B} adressierbar, im vorliegenden Beispiel die Netzvorwahl "+43661". Der Teilnehmer bzw. die Mobilstation 2 ist im Telefonnetz 3 durch seine bzw. ihre die Netzvorwahl MN_{B} inkludierende Rufnummer B adressierbar, im vorliegenden Beispiel die Rufnummer "+43661/22222". Diese an die Mobilstation 2 im Mobilfunknetz 6 vergebene Rufnummer B wird im weiteren auch als "erste" bzw. "persönliche" Rufnummer der Mobilstation 2 bezeichnet.

In ähnlicher Weise ist der Teilnehmer 1, im gezeigten Beispiel wieder eine Mobilstation in einem Mobilfunknetz 4 mit der Netzvorwahl MN_{A}, z.B. "+43660", durch seine bzw. ihre Rufnummer A, hier "+43660/11111", identifiziert. Für die Zwecke des vorliegenden Verfahrens ist es jedoch nicht erforderlich, dass das Netz 4 ein Mobilfunknetz und der Teilnehmer 1 eine Mobilstation ist, das Netz 4 des Teilnehmers 1 könnte auch ein Festnetz (Plain Old Telephone System, POTS) mit der Fähigkeit zur Übermittlung von Anruferkennungen (Caller Line Identification, CLI) sein, oder ein an das Telefonnetz 3 angeschlossenes VoIP-Netz (Voice over IP) sein, in welchem der Teilnehmer 1 z.B. ein Internet-Telefon oder Internet-Terminal ist.

Das die Netze 4 und 6 in den Anruf- und Rückrufsituationen der Fig. 1 bis 4 verbindende Netz 5 des Telefonnetzes 3 ist wiederum - so wie das Mobilfunknetz 6 der Mobilstation 2 - ein Mobilfunknetz nach einem 2G-, 3G-, 4G-, 5G-Standard oder höher, wie GSM, UMTS, LTE od.dgl. Das Mobilfunknetz 5 ist im Telefonnetz 3 durch seine Netzvorwahl MN_{VB} adressierbar, im vorliegenden Beispiel die Netzvorwahl "+43669". Das Mobilfunknetz 5 wird im weiteren auch als "zweites" Mobilfunknetz bezeichnet.

Das Mobilfunknetz 5 ist im gezeigten Beispiel in Form eines "Mobile Virtual Network Operator" (MVNO) 5' in einem dritten Mobilfunknetz 5" implementiert ("virtualisiert"), welches die Hardware-Infrastruktur für das MVNO-Netz 5' bereitstellt. Die Aufgabenverteilung zwischen MVNO-Netz 5' und MNO-Netz 5" des Mobilfunknetzes 5 kann dabei je nach Virtualisierungsgrad bzw. Anteil an Infrastruktur, die das MNO-Netz 5" für das MVNO-Netz 5' bereitstellt, verschieden sein, wie es als Virtualisierungsstufen "thick", "thin" und "skinny" bzw. "full" und "light" für MVNOs in der Technik bekannt ist. Es versteht sich jedoch, dass das Mobilfunknetz 5 auch ohne Virtualisierungsaufteilung in die Netze 5' und 5" durch ein einziges Mobilfunknetz nach den genannten Standards realisiert sein kann.

Das Mobilfunknetz 5 enthält zumindest einen Serviceknoten 7 mit - darin integrierter oder daran angeschlossener - Datenbank 8. Der Serviceknoten 7 ist im gezeigten Beispiel im MVNO-Netz 5' beheimatet, kann alternativ jedoch auch im infrastrukturbereitstellenden MNO-Netz 5" beheimatet sein kann, oder auch über beide Netze 5', 5" verteilt sein. In einem Mobilfunknetz 5 nach dem GSM-, UMTS- oder LTE-Standard ist der Serviceknoten 7 beispielsweise im zentralen Vermittlungsknoten (Mobile Services Switching Center, MSC) des Mobilfunknetzes 5 implementiert oder daran über eine Datenverbindung angeschlossen.

Um die persönliche Rufnummer B der Mobilstation 2 gegenüber anrufenden oder angerufenen Teilnehmern wie dem Teilnehmer 1 zu schützen, werden mit Hilfe der geschilderten Komponenten die folgenden Schritte ausgeführt.

In einem ersten, dem Anruf vom Teilnehmer 1 zur Mobilstation 2 (oder umgekehrt) vorhergehenden Schritt werden der Mobilstation 2, genauer deren erster, persönlicher Rufnummer B, eine oder mehrere zweite, "virtuelle" Rufnummer" VB₁, VB₂, ..., allgemein VBₙ, im zweiten Mobilfunknetz 5 zugeordnet. Als Beispiel für eine solche virtuelle Rufnummer VBₙ im zweiten Mobilfunknetz 5 wird hier die Rufnummer "+43669/87654" verwendet. Die Zuordnung wird in der Datenbank 8 des Serviceknotens 6 des Mobilfunknetzes 5 in einer Zuordnungstabelle 9 gespeichert. Jede Zuordnung B↔VB_{1,} B↔VB₂, ..., B↔VB_{n,} ... ist dabei gleichzeitig durch ihre Zuordnungskennung 1, 2, ... allgemein n, identifiziert. Es versteht sich, dass im einfachsten Fall einer nur einzigen Zuordnung B↔VB die Zuordnungskennung n entbehrlich ist und entfallen kann.

Die virtuelle Rufnummer VBₙ kann bedenkenlos vom Benutzer der Mobilstation 2 publiziert und an Dritte weitergegeben werden, z.B. an den Teilnehmer 1, da das Mobilfunknetz 5 und die weiteren Schritte des beschriebenen Verfahrens seine persönliche Rufnummer B im Mobilfunknetz 6 schützen bzw. anonymisieren.

Möchte der Teilnehmer 1 die Mobilstation 2 anrufen, wählt er die jeweilige ihm vom Benutzer bekanntgegebene virtuelle Rufnummer VBₙ, welche die Netzvorwahl MN_{VB} des zweiten Mobilfunknetzes 5 als Vorwahl enthält. Dies baut einen ersten Anruf 10 vom Teilnehmer 1 zum Mobilfunknetz 5 auf, welcher als Zielrufnummer (Mobile Target) MT₁ die n-te virtuelle Rufnummer VBₙ der Mobilstation 2 und als Anruferkennung (Caller Line Identification) CLI₁ die Rufnummer A des Teilnehmers 1 enthält.

Der erste Anruf 10 wird im Telefonnetz 3 anhand der Netzvorwahl NM_{VB} zum Mobilfunknetz 5 geleitet (verkehrsausgeschieden). Alternativ könnte die virtuelle Rufnummer VBₙ im Telefonnetz 3 bekanntgegeben worden sein, z.B. durch Einspeisen in ein Heimatortsregister (Home Location Register, HLR) 11 des Mobilfunknetzes 5. Ein solcher Eintrag im HLR wird in GSM-, UMTS- oder LTE-Netzen in standardkonformer Weise im Telefonnetz 3 bzw. allen darin enthaltenen Mobilfunknetzen distribuiert, um die Beheimatung der Rufnummer VBₙ im Mobilfunknetz 5 und damit dessen Zuständigkeit anzuzeigen, so dass der Anruf 10 zum Mobilfunknetz 5 geleitet wird.

Der Anruf 10 wird im Mobilfunknetz 5 an einem internen oder virtuellen Anschluss 12 desselben entgegengenommen bzw. terminiert, unter Mitwirkung des Serviceknotens 7. Der Serviceknoten 7 extrahiert nun aus der in der Signalisierung des ersten Anrufs 10 enthaltenen Zielrufnummer MT₁ die virtuelle Rufnummer VBₙ, schlägt diese in der Zuordnungstabelle 9 nach und ermittelt daraus die zugeordnete persönliche Rufnummer B sowie - falls dieser mehrere virtuelle Rufnummern VBₙ zugeordnet sind - die Kennung n der jeweiligen Zuordnung VBₙ↔B. Zusätzlich generiert der Serviceknoten 7 eine neue ("zweite") Anruferkennung CLI₂ aus der Netzvorwahl MN_{VB} des Mobilfunknetzes 5 und der ersten Anruferkennung CLI₁, optional ergänzt um die Zuordnungskennung n.

Anschließend veranlasst der Serviceknoten 7 den Aufbau eines zweiten Anrufs 13 vom Mobilfunknetz 5 ausgehend an die durch die Rufnummer B identifizierte Mobilstation 2 im Mobilfunknetz 6. Die Zielrufnummer MT₂ des zweiten Anrufs 13 ist dabei die Rufnummer B, und als Anruferkennung wird die neugenerierte zweite Anruferkennung CLI₂ mitübermittelt.

Nach dem Aufbauen des zweiten Anrufs 13 (oder auch schon währenddessen) schaltet der Serviceknoten 7 den im Mobilfunknetz 5 terminierten ersten Anruf 10 zum zweiten Anruf 13 durch, d.h. er verbindet die Sprachdaten des ersten Anrufs 10 mit den Sprachdaten des zweiten Anrufs 13 bzw. leitet SMS-Daten aus dem ersten Anruf 10 als SMS-Daten im zweiten Anruf 13 weiter, siehe die Verbindung 14.

Beim Entgegennehmen des ersten Anrufs 10, Aufbauen des zweiten Anrufs 13 und/oder Durchschalten der Verbindung 14 vom ersten Anruf 10 zum zweiten Anruf 13 kann der Serviceknoten 7 auch Filterfunktionen hinsichtlich vom Benutzer der Mobilstation 2 gewünschter oder unerwünschter Anruferkennungen CLI₁ durchführen, sog. "whitelisting" oder "blacklisting", um den Benutzer der Mobilstation 2 vor unerwünschten Anrufen zu bewahren bzw. nur gewünschte Anrufe durchzustellen. Zu diesem Zweck können im Serviceknoten 7 bzw. dessen Datenbank 8 zur persönlichen Rufnummer B der Mobilstation 2 eine (oder mehrere) Zulassungslisten ("whitelists") WLₙ von ersten Anruferkennungen CLI₁ (Rufnummern A) gespeichert sein, die durchgeschaltet werden sollen (alle anderen werden gesperrt); oder eine (oder mehrere) Sperrlisten ("blacklists") BLₙ von solchen ersten Anruferkennungen CLI₁ (Rufnummern A), welche nicht durchgeschaltet werden dürfen (alle anderen werden durchgeschaltet), d.h. für welche keine Durchschaltung (Verbindung 14) erfolgt und demgemäß auch kein zweiter Anruf 13 aufgebaut zu werden braucht.

Im Falle mehrerer virtueller Rufnummer VBₙ können auch unterschiedliche Zulassungslisten WLₙ bzw. Sperrlisten BLₙ verwendet werden, und zwar je nach ermittelter Zuordnung n, wie sie sich aus der vom Teilnehmer 1 gewählten virtuellen Rufnummer VBₙ ergibt. In diesem Fall wird also die der jeweiligen gewählten virtuellen Rufnummer VBₙ zugeordnete Zulassungs- oder Sperrliste WLₙ, BLₙ aus der Datenbank 8 herausgesucht und dann überprüft, ob die Anruferkennung CLI₁ des ersten Anrufs 10 darin enthalten ist oder nicht. Nur dann, wenn diese entweder in der Zulassungsliste WLₙ enthalten ist oder nicht in der Sperrliste BLₙ enthalten ist, wird der zweite Anruf 13 aufgebaut und der erste Anruf 10 zum zweiten Anruf 13 durchgeschaltet (Verbindung 14), andernfalls bleibt der erste Anruf 10 am Anschluss 12 des Mobilfunknetzes 5 terminiert bzw. wird abgebrochen. Optional kann der anrufende Teilnehmer 1 auch einen entsprechenden Ansagetext erhalten, den der Serviceknoten 7 in den Anschluss 12 einspielt.

Die Zulassungs- und/oder Sperrlisten WLₙ, BLₙ können in einer eigenen Zuordnungstabelle 9' des Serviceknotens 7 bzw. dessen Datenbank 8 gespeichert sein, oder in derselben Zuordnungstabelle 9, in der auch die Zuordnungen B↔VBₙ gespeichert sind; beispielsweise könnte bei jeder einzelnen Zuordnung B↔VBₙ die jeweilige Liste WLₙ und/oder BLₙ mitgespeichert sein.

Ein solches "Blacklisting" bzw. "Whitelisting" funktioniert bei dem vorgestellten Verfahren sogar für solche Anrufe 10 vom Teilnehmer 1 aus, die mit einer "Rufnummernunterdrückung" aufgebaut werden. Nach herkömmlichen CLI-Telefonstandards entfernt eine solche Rufnummernunterdrückung die Anruferkennung CLI₁ nicht aus dem Anruf 10, sondern kennzeichnet die Anruferkennung CLI₁ im Anruf 10 lediglich mit einem Flag als "unterdrückt"; das Flag wird üblicherweise erst im letzten Teilnetz des Telefonnetzes 3 bei der Zustellung des Anrufs zum gerufenen Teilnehmer ausgewertet und dort dann die Anruferkennung unterdrückt. Die Anruferkennung CLI₁ ist damit jedenfalls noch in dem zwischenliegenden Mobilfunknetz 5 und damit im Serviceknoten 7 verfügbar und kann für die genannten Blacklisting- und Whitelisting-Funktionen ausgewertet werden.

Da jeder Anruf 13, der in der Mobilstation 2 einlangt, durch die in der zweiten Anruferkennung CLI₂ enthaltenen Netzvorwahl MN_{VB} des Mobilfunknetzes 5 als ein an die virtuelle Rufnummer VBₙ der Mobilstation 2 gerichteter Anruf erkennbar ist, kann der Benutzer der Mobilstation 2 anhand der Anruferkennung CLI₂ zusätzlich entscheiden, ob er einen solchen Anruf entgegennehmen möchte oder nicht. Wenn die Mobilstation 2 mehrere virtuelle Rufnummern VBₙ hat, kann der Benutzer anhand der mitübermittelten Zuordnungskennung n auch den jeweiligen Öffentlichkeitskreis, welchem er die jeweilige virtuelle Rufnummer VBₙ bekanntgegebenen hat, erkennen.

Die Mobilstation 2 kann z.B. als Smartphone auch so programmiert sein, dass sie die Netzvorwahl MN_{VB} des Mobilfunknetzes 5 automatisch in der Anruferkennung CLI₂ detektiert und dazu spezielle Verarbeitungsschritte für einen solchen Anruf ausführt, z.B. eine spezielle optische oder akustische Signalisierung, eine deutliche graphische Anzeige der Zuordnungskennung n, eine spezielle Anrufprotokollierung, einen individuellen Ansagetext eines Anrufbeantworters usw.

Solche für die jeweilige gewählte virtuelle Rufnummer VBₙ individuellen Ansagetexte können im übrigen auch bereits vom Serviceknoten 7 selbst in den den ersten Anruf 10 terminierenden Anschluss 12 eingespielt werden, z.B. wenn der Benutzer der Mobilstation 2 den zweiten Anruf 13 nicht innerhalb einer vorgegebenen Zeitspanne beantwortet, ihn versäumt oder bewusst nicht abhebt. Eine solche individuelle Ansagetext- bzw. Anrufbeantworterfunktion, d.h. je nach gewählter virtueller Rufnummer VBₙ, kann daher sowohl direkt in der Mobilstation 2 anhand der in der Anruferkennung CLI₂ enthaltenen Zuordnungskennung n als auch direkt im Serviceknoten 7 anhand der in der Zielrufnummer MT₁ enthaltenen Rufnummer VBₙ ausgeführt werden.

Über eine (optionale) Datenverbindung 15 kann der Benutzer der Mobilstation 2 alle seine virtuellen Rufnummern VBₙ im Mobilfunknetz 5 auch selbst verwalten, z.B. registrieren (erwerben), deaktivieren oder löschen usw., beispielsweise von einem Internetterminal 16 aus. Das Terminal 16 kann beispielsweise - wenn die Mobilstation 2 ein internetfähiges Smartphone ist - auch direkt durch die Mobilstation 2 gebildet sein, wenn diese eine Datenverbindung 15 zum Mobilfunknetz 5 bzw. dessen Serviceknoten 7 hat. Über die Datenverbindung 15 und das Internet-terminal 16 (bzw. eine entsprechende Terminalapplikation in der Mobilstation 2) kann der Benutzer auch die Zulassungs- und Sperrlisten WLₙ, BLₙ für die Filterfunktionen des Serviceknotens 7 (ein)pflegen.

Um allfällige regulatorische Auflagen hinsichtlich der Nachvollziehbarkeit von Verbindungen zu erfüllen, kann der Serviceknoten 7 optional auch über eine Enforcement-Schnittstelle 17 für eine Behördeneinschau in die Zuordnungstabelle 9 verfügen.

Fig. 2 zeigt die Verfahren zum Aufbauen eines Anrufs oder eines Rückrufs von der Mobilstation 2 zum Teilnehmer 1. Zunächst wird die Rückrufsituation unter Verwendung der zweiten Anruferkennung CLI₂, die in der Mobilstation 2 im Zuge des zweiten Anrufs 13 von Fig. 1 erhalten wurde, erläutert.

Beim Rückruf wird die zweite Anruferkennung CLI₂ in einem dritten Anruf 18 als neue Zielrufnummer MT₃ verwendet. Anhand der darin enthaltenen Netzvorwahl MN_{VB} des Mobilfunknetzes 5 wird der dritte Anruf 18 im Telefonnetz 3 zum Mobilfunknetz 5 geleitet (verkehrsausgeschieden) und dort wieder unter Mitwirkung des Serviceknotens 7 an einem internen oder virtuellen Anschluss 19 des Mobilfunknetzes 5 terminiert.

Der Serviceknoten 7 extrahiert nun die in der Zielrufnummer MT₃ enthaltene Rufnummer A, d.h. die erste Anruferkennung CLI₁ aus dem ersten Anruf 10, z.B. einfach durch Entfernen der Netzvorwahl MN_{VB} und der optionalen Zuordnungskennung n, baut einen vierten Anruf 20 vom Mobilfunknetz 5 zum Teilnehmer 1 hin auf und schaltet den dritten Anruf 18 hinsichtlich der darin transportierten Sprach- oder SMS-Daten zum vierten Anruf 20 durch, siehe Verbindung 21.

Der vierte Anruf 20 kann entweder mit unterdrückter Anruferkennung erfolgen oder - bevorzugt - eine neue, vierte Anruferkennung CLI₄ enthalten, welche der Serviceknoten 7 wie folgt erzeugt hat. Aus der im dritten Anruf 18 von der Mobilstation 2 übermittelten Anruferkennung CLI₃, die gleich der persönlichen Rufnummer B der Mobilstation 2 ist, und - optional - der in der Zielrufnummer MT₃ enthaltenen Zuordnungskennung n sucht der Serviceknoten 7 aus der Zuordnungstabelle 9 die jeweilige durch die Zuordnungskennung n angegebene Zuordnung B↔VBₙ heraus (oder, falls keine Zuordnungskennung n vorhanden, die einzige Zuordnung B↔VB) und setzt die solcherart ermittelte virtuelle Rufnummer VBₙ als neue Anruferkennung CLI₄ in dem vierten Anruf 20 ein.

Der Benutzer am Endgerät 1 erhält damit einen Rückruf 20 signalisiert, der als Anruferkennung CLI₄ genau jene virtuelle Rufnummer VBₙ anzeigt, welche er zuvor in seinem Erstanruf (Fig. 1) verwendet hat. Das Anruf- und Rückrufverfahren der Fig. 1 und 2 ist daher für den Teilnehmer 1 vollkommen transparent, ohne die persönliche Rufnummer B der Mobilstation 2 preiszugeben, und ermöglicht auch einen datengeschützten Rückruf von der Mobilstation 2 zum Teilnehmer 1.

Die in Fig. 2 gezeigten Schnitte für einen Rückruf von der Mobilstation 2 zum Teilnehmer 1 gelten gleichermaßen auch für einen Erstanruf von der Mobilstation 2 zum Teilnehmer 1, d.h. wenn es sich nicht um einen Rückruf handelt, mit dem einzigen Unterschied, dass die in der Zielrufnummer MT₃ des dritten Anrufs 18 angegebene Rufnummer A nicht zuvor im zweiten Anruf 13 erhalten wurde, sondern eine beliebige, vom Benutzer an der Mobilstation 2 gewählte Rufnummer A ist. Durch Vorwählen der Netzvorwahl MN_{VB} - und optional der Zuordnungskennung n - vor der gewünschten Rufnummer A wird wieder die Zielrufnummer MT₃ = MN_{VB}/n/A zusammengestellt. Anhand der Netzvorwahl MN_{VB} in der Zielrufnummer MT₃ wird der Anruf 18 zum Mobilfunknetz 5 geleitet, dort wird die persönliche Rufnummer B der rufenden Mobilstation 2 aus der Anruferkennung CLI₃ extrahiert, aus der Zuordnungstabelle 9 die zugeordnete virtuelle Rufnummer VBₙ herausgesucht, gegebenenfalls unter Verwendung der aus der Zielrufnummer MT₃ extrahierten Zuordnungskennung n, und im vierten Anruf 20 als neue Anruferkennung CLI₄ dem angerufenen Teilnehmer 1 signalisiert.

Beim Zusammenstellen der Zielrufnummern MT₃ für den Anruf 18 können die Netzvorwahl MN_{VB} und die (optionale) Zuordnungskennung n vom Benutzer an der Mobilstation 2 manuell der Rufnummer A vorgesetzt ("vorgewählt") werden. Alternativ (und bevorzugt) kann dies auch automatisch in der Mobilstation 2 erfolgen, beispielsweise durch eine entsprechend programmierte Applikation in der Mobilstation 2, welche für solch "datengeschützte" Anrufe 18 automatisch die Netzvorwahl MN_{VB} des schützenden Mobilfunknetzes 5 ergänzt. Im Falle mehrerer virtueller Rufnummern VBₙ kann die Applikation dabei dem Benutzer auch eine Auswahlmöglichkeit für die gewünschte virtuelle Rufnummer VBₙ bieten, die dem Teilnehmer 2 als Anruferkennung CLI₄ signalisiert werden soll, beispielsweise in Form der jeweiligen Zuordnungskennung n, welche der Benutzer der Mobilstation 2 für den zu tätigenden Anruf in der Applikation auswählt.

Fig. 3 zeigt eine alternative Ausführungsform des Anruf- bzw. Rückrufverfahrens von Fig. 2, wobei im folgenden nur auf die Unterschiede zu Fig. 2 eingegangen wird; für alle übrigen Aspekte des Verfahrens des Verfahrens von Fig. 3 gilt das oben Gesagte und das Verfahren von Fig. 3 kann mit allen oben genannten Merkmalen der Ausführungsformen der Fig. 1 und 2 kombiniert werden.

Fig. 3 zeigt die Verwendung einer verkürzten Zielrufnummer MT₃' anstelle der Zielrufnummer MT₃ für den Anruf 18 von der Mobilstation 2 zum Mobilfunknetz 5, um allfälligen Stellenzahlbeschränkungen für Zielrufnummern im Telefonnetz 3 zu begegnen.

Dazu wird die Zielrufnummer MT₃ in einen ersten, der verkürzten Zielrufnummer MT₃' entsprechenden Teil X₁ und einen verbleibenden zweiten Teil X₂ geteilt, d.h. MT₃ = X₁ + X₂ = MT₃' + X₂. Die Bezeichnungen "erster" und "zweiter" Teil für die Teile X₁ und X₂ der Rufnummer MT₃ sind nicht sequentiell zu verstehen, vielmehr kann der eine Teil X₁ jedes beliebige Subset von Stellen bzw. Ziffern der Zielrufnummer MT₃ umfassen, und der andere Teil X₂ die dann verbleibenden Stellen bzw. Ziffern der Zielrufnummer MT₃.

Damit der Anruf 18 im zweiten Mobilfunknetz 5 entgegengenommen werden kann, enthält der erste Teil X₁ bzw. die verkürzte Zielrufnummer MT₃' entweder die Netzvorwahl MN_{VB} des zweiten Mobilfunknetzes 5, so dass der Anruf 18 im Telefonnetz 3 zum Mobilfunknetz 5 verkehrsausgeschieden werden kann, oder eine im zweiten Mobilfunknetz 5 vergebene, vorgegebene Rufnummer C, welche über das Heimatortsregister (HLR) 11 des Mobilfunknetzes 5 im gesamten Telefonnetz 3 distribuiert wird, um den Anruf 18 zum Mobilfunknetz 5 leiten zu können.

Der erste Teil X₁ kann ferner optional die Zuordnungskennung n und einen ersten Teil (Subset) A₁ der Rufnummer A des Teilnehmers 1 enthalten, beispielsweise deren erste Ziffern, hier deren Vorwahl-Teil "+43660". Der zweite Teil X₂ der aufgeteilten Zielrufnummern MT₃ enthält dann den restlichen Teil (Subset) A₂ der Rufnummer A des Teilnehmers 1, hier beispielsweise die Ziffern "11111" nach der Vorwahl. Wenn der erste Teil A₁ der Rufnummer A jedoch noch nicht bereits im ersten Teil X₁ enthalten ist, dann liegt er ebenfalls im zweiten Teil X₂, d.h. der zweite Teil X₂ enthält dann die gesamte Rufnummer A = A₁ + A₂. Die optionale Zuordnungskennung n kann anstelle im ersten Teil X₁ auch im zweiten Teil X₂ liegen.

Der erste Teil X₁ der Zielrufnummer MT₃ wird nun als verkürzte Zielrufnummer MT₃' für den Aufbau des Anrufs 18 von der Mobilstation 2 zum Anschluss 19 des Mobilfunknetzes 5 verwendet, analog zu Fig. 2. Der zweite Teil X₂ der Zielrufnummer MT₃ wird hingegen als Folge 18' von Tastwahltönen nach einem Mehrfrequenzwahlverfahren (MFV), auch als DTMF-Verfahren bekannt (Dual-Tone Multi-Frequency), über den aufgebauten Anruf 18 zum Anschluss 19 des Serviceknotens 7 übertragen.

Die Folge 18' von Tastwahltönen kann beispielsweise vom Benutzer der Mobilstation 2 durch Betätigen entsprechender Wahltasten über einen in der Mobilstation 2 angeordneten Tastwahltongenerator 2' ausgelöst werden, oder eine entsprechend programmierte Applikation in der Mobilstation 2 wählt gleichsam "automatisch" die Tastwahltonfolge 18' im Anschluss an den Anrufaufbau nach.

Ein Tastwahltondekoder 7' im Serviceknoten 7 dekodiert nun die im Anruf 18 am Anschluss 19 empfangene Tastwahltonfolge 18', um daraus den Informationsanteil X₂ der Zielrufnummer MT₃ zu regenerieren. Durch Vereinigen der Teile X₁ und X₂, d.h. MT₃' und X₂, im Serviceknoten 7 wird nun die gesamte Zielrufnummer MT₃ regeneriert und daraus wieder - wie in Fig. 2 - die Rufnummer A und optional die Zuordnungskennung n extrahiert; die weiteren Schritte laufen so wie bei Fig. 2 beschrieben.

Fig. 4 zeigt weitere alternative Ausführungsformen der Verfahren der Fig. 1 bis 3, wobei hier zur besseren Übersicht nur die beteiligten Teilnehmer, Netze und Anrufverbindungen dargestellt sind, dies nun aber sowohl für die Anrufsituation von Fig. 1 als auch die Rückrufsituation der Fig. 2 und 3. Soferne nicht nachstehend anders beschrieben, sind in Fig. 4 alle Komponenten, Funktionen und Verfahrensabläufe so wie zuvor in Bezug auf die Fig. 1 bis 3 beschrieben.

Gemäß Fig. 4 kann beim Anrufaufbau vom Teilnehmer 1 zum Teilnehmer 2 der zweite Anruf 13 auch über ein anderes Mobilfunk- oder Festnetz 5'" aufgebaut werden. Im gezeigten Beispiel ist dieses andere bzw. weitere Netz 5"' ein Mobilfunknetz mit der hier beispielhaften Netzvorwahl "+43668". Es versteht sich, dass das weitere Netz 5''' - so wie das Mobilfunknetz 5 - ebenfalls als ein MVNO in einem MNO-Mobilfunknetz virtualisiert sein kann.

Der Serviceknoten 7 steht sowohl mit dem zweiten Mobilfunknetz 5 als auch dem weiteren Netz 5''' in Verbindung und kann somit den im Mobilfunknetz 5 am Anschluss 12 einlangenden Anruf 10 über die Verbindung 14 zu dem vom weiteren Netz 5''' aus aufgebauten zweiten Anruf 13 durchschalten.

Auch in der umgekehrten Situation des Rückrufens vom Teilnehmer 2 zum Teilnehmer 1 kann der dritte Anruf 13 an einem Anschluss 19 des weiteren Netzes 5'" empfangen und vom Serviceknoten 7 über die Verbindung 21 zum vierten Anruf 20 durchgeschaltet werden.

Der Serviceknoten 7 kann dabei sowohl im Mobilfunknetz 5 - sei es im MVNO-Netz 5' oder dem infrastrukturbereitstellenden MNO-Netz 5" - als auch in dem weiteren Netz 5''' beheimatet sein, oder auch über beide Netze 5, 5'" verteilt sein, einschließlich allfälliger diese implementierender MVNO- und MNO-Netze. In Mobilfunknetzen 5, 5''' nach dem GSM-, UMTS- oder LTE-Standard kann der Serviceknoten 7 beispielsweise in einem zentralen Vermittlungsknoten MSC eines der Netze 5, 5'" implementiert und mit jeweils dem Vermittlungsknoten des anderen Netzes 5''', 5 über eine Datenverbindung verbunden sein, oder er ist von den MSC-Vermittlungsknoten der Netze 5, 5'" gesondert und über jeweils eine Datenverbindung mit diesen verbunden. Auch kann die Funktionalität des Serviceknotens 7 durch einen oder mehrere der Vermittlungsknoten MSC selbst bzw. darauf ablaufende Tasks gemeinsam realisiert sein.

Die Erfindung ist nicht auf die dargestellten Ausführungsformen beschränkt, sondern umfasst alle Varianten, Modifikationen und deren Kombinationen, die den Rahmen der angeschlossenen Ansprüche fallen.

## Patentansprüche

1. Verfahren zum Anrufaufbau von einer Mobilstation (2), an die eine erste Rufnummer (B) in einem ersten Mobilfunknetz (6) vergeben ist, zu einem Teilnehmer (1), der eine weitere Rufnummer (A) hat, **gekennzeichnet durch**:
Speichern einer Zuordnung (9) zwischen der ersten Rufnummer (B) und einer in einem zweiten Mobilfunknetz (5) vergebenen zweiten Rufnummer (VBₙ) in einem Serviceknoten (7) des zweiten Mobilfunknetzes (5);
Entgegennehmen eines Anrufs (18), welcher eine vorgegebene Rufnummer (C) im zweiten Mobilfunknetz (5) und/oder einen ersten Teil (A₁) der weiteren Rufnummer (A) in seiner Zielrufnummer (MT₃') und die erste Rufnummer (B) als Anruferkennung (CLI₃) enthält, im zweiten Mobilfunknetz (5);
Empfangen einer Folge (18') von Tastwahltönen, welche den zweiten Teil (A₂) der weiteren Rufnummer (A) und, falls nicht bereits in der Zielrufnummer (MT₃') enthalten, auch den ersten Teil (A₁) der weiteren Rufnummer (A) kodiert, über den entgegengenommenen Anruf (13), und Dekodieren der Folge (18') im Serviceknoten (7);
Extrahieren der weiteren Rufnummer (A) aus der Zielrufnummer (MT₃) und aus der dekodierten Folge (18'), Ermitteln der der ersten Rufnummer (B) zugeordneten zweiten Rufnummer (VBₙ) aus der im Serviceknoten (7) gespeicherten Zuordnung (9), und Erzeugen einer weiteren Anruferkennung (CLI₄) umfassend die zweite Rufnummer (VBₙ); und
Aufbauen eines weiteren Anrufs (20) vom zweiten Mobilfunknetz (5) oder einem weiteren Mobilfunk- oder Festnetz (5''') zu dem durch die extrahierte weitere Rufnummer (A) adressierten Teilnehmer (1) und Durchschalten des Anrufs (18) zum weiteren Anruf (20), wobei die weitere Anruferkennung (CLI₄) im weiteren Anruf (20) mitübermittelt wird.

2. Verfahren nach Anspruch 1, ferner umfassend:
Speichern zumindest einer weiteren Zuordnung (9) zwischen jeweils der ersten Rufnummer (B) und einer im zweiten Mobilfunknetz (5) vergebenen weiteren zweiten Rufnummer (VBₙ) im Serviceknoten (7), wobei für jede gespeicherte Zuordnung einer ersten Rufnummer (B) eine Zuordnungskennung (n) vergeben wird, und wobei entweder die Zielrufnummer (MT₃') oder die Folge (18') auch die Zuordnungskennung (n) enthält;
wobei beim Extrahieren auch die Zuordnungskennung (n) extrahiert wird; und
wobei beim Erzeugen der weiteren Anruferkennung (CLI₄) die der ersten Rufnummer (B) zugeordnete zweite Rufnummer (VBₙ) anhand der durch die extrahierte Zuordnungskennung (n) angegebenen Zuordnung ermittelt wird.

3. Verfahren nach Anspruch 1 oder 2, **dadurch gekennzeichnet, dass** der Anruf (18) anhand der Netzvorwahl (MN_{VB}) des zweiten Mobilfunknetzes (5) erkannt und zu diesem geleitet wird, wo er an einem Anschluss (19) des zweiten Mobilfunknetzes (5) entgegengenommen und von dort zum vierten Anruf (20) durchgeschaltet wird.

4. Verfahren nach einem der Ansprüche 1 bis 3, **dadurch gekennzeichnet, dass** das zweite Mobilfunknetz (5) als Mobile Virtual Network Operator (5') in einem dritten Mobilfunknetz (5") virtualisiert ist.
